# DEMANDE DE BREVET EUROPEEN

(11) **EP 4 620 798 A1**
(43) Date de publication de la demande: **24.09.2025**
(21) Numéro de dépôt: 25165665.8
(22) Date de dépôt: 24.03.2025
(51) Int. Cl.: B62M 6/45, B62M 25/08, B62M 6/55

(54) **LOI DE CADENCE PÉDALE À PENTES MODIFIÉES D'UN MOTEUR DE VÉLO À ASSISTANCE ÉLECTRIQUE À BOÎTE DE VITESSES INTEGRÉE**

(30) Priorité: 22.03.2024 FR 2402891
(71) Demandeur: Bontaz Centre, 74460 Marnaz (FR)
(72) Inventeur: PERRET, Adrien Stanislas, 74000 ANNECY (FR)
(74) Mandataire: Brevalex

(57) **Abrégé**

L'invention concerne un dispositif (1) de commande de la cadence de pédalage d'un vélo à assistance électrique (1), comprenant :
- au moins un système de boite de vitesse (20), comprenant des ratio de boîte de vitesse maximale (rgb_max) et minimale (rgb_min);
- des moyens (21) de traitement de données pour :
∘ recevoir une information de vitesse de rotation du pédalier, dite consigne de cadence pédale, et une information de cadence de roue mesurée;
∘ calculer deux valeurs de cadence de roue, dont :
▪ une plus petite valeur de cadence de roue, à partir d'au moins la valeur du ratio de boîte minimale et de la consigne de cadence pédale,
▪ une plus grande valeur de cadence de roue, à partir d'au moins la valeur du ratio de boîte maximale et de la consigne de cadence pédale.

∘ calculer, à partir d'au moins ladite information de cadence de roue mesurée :
▪ au moins une commande de vitesse de rotation du pédalier,
▪ au moins une commande de ratio de boîte de vitesses.

## Description

### DOMAINE TECHNIQUE :

Le domaine de l'invention est celui des lois de commandes des systèmes embarqués et de l'algorithmique. Le domaine d'application concerne les systèmes de vélo à assistance électrique comprenant un système de boîte de vitesses, et plus généralement, les systèmes à transmission de vitesse continue (Continuously Variable Transmission ou CVT).

### ÉTAT DE LA TECHNIQUE ANTÉRIEURE

Les vélos électriques représentent une avancée significative dans la mobilité urbaine et dans le monde du cyclisme sportif. En effet, ils offrent une alternative propre, efficace et souvent plus rapide aux moyens de transport traditionnels. Ils sont dotés de moteurs électriques qui assistent le pédalage, permettant ainsi de parcourir différents reliefs et de plus longues distances sans fatigue excessive. Il devient ainsi possible de surmonter des obstacles tels que des pentes raides ou des terrains sinueux avec moins d'effort. Cette avancée permet à l'utilisateur de se concentrer sur la technique et de profiter de nouveaux parcours. De plus, les suspensions améliorées, les selles ergonomiques et la possibilité d'ajuster l'effort de pédalage selon les besoins du cycliste contribuent à un parcours plus agréable.

Mais, en milieu urbain, les arrêts sont très fréquents et les nombreux démarrages peuvent fatiguer, ce qui rend l'expérience cycliste plus éprouvante. Alors que, dans le milieu sportif, il serait souhaitable de conserver ou d'améliorer le confort, tout en répondant au besoin de pratiquer une activité sportive demandant un certain degré d'effort.

Dans cette optique, il se pose le problème pour un utilisateur du vélo électrique en milieu urbain, de disposer d'une assistance au pédalage impliquant moins d'effort lors du démarrage ou à faible vitesse vélo. Alors que, pour un utilisateur sportif, se pose le problème d'obtenir une assistance au prix d'un effort au pédalage plus élevé, tout en gardant ou en améliorant l'efficacité et la puissance de l'assistance obtenue. Plus précisément, il se pose le problème, pour le cycliste sportif, de pouvoir ajuster l'assistance en fonction de l'effort déployé. De même, un seuil de puissance maximal à ne pas dépasser par l'assistance électrique pourrait être envisagé.

Ainsi, il se pose le problème d'adapter l'effort de pédalage selon les besoins du cycliste et selon l'environnement de circulation en choisissant différents niveaux d'assistance électrique. Ces différents niveaux pourraient apporter une assistance plus rapide ou plus lente ou plus importante selon les besoins de chacun.

### EXPOSÉ DE L'INVENTION

L'invention a pour objectif de remédier au moins en partie aux inconvénients de l'art antérieur, et plus particulièrement de proposer un dispositif pouvant s'adapter aux besoins de chaque cycliste.

Pour cela, un objet de l'invention concerne un dispositif de commande de la cadence de pédalage d'un vélo à assistance électrique, ce dispositif comprenant :
- Au moins un système de boite de vitesse, comprenant un ratio de boîte de vitesse maximale (rgb_max) et un ratio de boîte de vitesse minimale (rgb_min);
- des moyens de traitement de données, qui peuvent être intégrés à la boite de vitesse, spécialement programmés pour :
   o recevoir une information de vitesse de rotation du pédalier (wp_target), dite consigne de cadence pédale, et une information de vitesse de rotation de la roue du vélo (ww), dite cadence de roue mesurée ;
   o calculer deux valeurs de cadence de roue, dont :
      ▪ une plus petite valeur de cadence de roue (WC1), nommée premier point de fonctionnement, et calculée à partir d'au moins la valeur du ratio de boîte minimale et de la valeur de la consigne de cadence pédale,
      ▪ une plus grande valeur de cadence de roue (WC2), nommée deuxième point de fonctionnement, et calculée à partir d'au moins la valeur du ratio de boîte de vitesse maximale et de la valeur de la consigne de cadence pédale.

Ainsi un utilisateur peut sélectionner une consigne de cadence pédale, les moyens de traitement de données calculant deux valeurs de cadence de roue WC1 et WC2.

Les moyens de traitement de données peuvent en outre être spécialement programmés pour :
* calculer une commande de vitesse de rotation du pédalier (wp_command), dite commande de la cadence pédale,
* et/ou une commande de ratio de boîte de vitesses (rgb_command), dite commande de ratio de boîte de vitesses, à partir de ladite information de cadence de roue mesurée, par exemple :
   - pour au moins une cadence de roue mesurée inférieure à WC1 ;
   - et/ou pour au moins une cadence de roue mesurée comprise entre WC1 et WC2 ;
   - et/ou pour au moins une cadence de roue mesurée supérieure à WC2.

L'invention permet par exemple, pour un utilisateur du vélo électrique en milieu urbain, de disposer d'une assistance impliquant une cadence de pédalage plus faible lors du démarrage ou à faible vitesse vélo ; pour un utilisateur sportif, elle permet d'obtenir une assistance au prix d'une cadence de pédalage plus élevée.

Selon une réalisation :
- la commande de la cadence pédale comporte une zone, ou première zone, de fonctionnement, définie pour une cadence roue mesurée non nulle et inférieure au premier point de fonctionnement, les moyens étant programmés pour calculer :
   - une commande de la cadence pédale, variable et inférieure à la consigne de cadence pédale à partir d'au moins la valeur de ratio minimale constante de boite de vitesses ;
   - et/ou une commande de ratio de boîte, constante et égale ou ratio de boite minimale, ou variable, à partir d'au moins la valeur de ratio minimal constante de boîte de vitesses.
- et/ou la loi de la cadence pédale comporte une zone, ou deuxième zone, de fonctionnement, définie pour une cadence roue mesurée comprise entre le premier et le deuxième point de fonctionnement, les moyens étant programmés pour calculer :
   - une commande de la cadence pédale :
      - soit constante et égale à la consigne de cadence pédale ;
      - soit variable, à partir d'au moins la valeur de la consigne de cadence pédale; dans ce cas, elle peut être variable suivant une pente, dite pente de la cadence pédale, en étant supérieure ou inférieure ou égale à la consigne de cadence pédale ; en variante, elle peut être non linéaire ;
   - et/ou une commande de ratio de boîte de vitesses variable, comprise entre la valeur minimale de ratio de boîte de vitesse et la valeur maximale de ratio de boîte de vitesses.

Dans un dispositif selon l'invention, la commande du ratio de boîte peut comporter une deuxième zone de fonctionnement, définie pour une cadence roue mesurée comprise entre le premier et le deuxième point de fonctionnement, les moyens étant programmés pour calculer une commande de ratio de boîte, variable entre le ratio de boîte minimal et le ratio de boîte maximal.

Les moyens de traitements de données peuvent en outre être programmés pour déterminer au moins une valeur de cadence roue maximale au-delà de laquelle la commande de la cadence pédale est limitée à une valeur maximale prédéterminée, dite commande cadence pédale maximale, ladite valeur de cadence roue maximale étant déterminée à partir de la valeur de commande de ratio maximale et de la commande cadence pédale maximale.

La loi de la cadence pédale peut donc comporter :
- une zone, ou troisième zone, de fonctionnement, définie pour une cadence roue mesurée comprise entre le deuxième point de fonctionnement et la valeur cadence roue maximale, les moyens de traitement des données étant programmés pour calculer :
   - une commande de la cadence pédale variable, supérieure à la cadence pédale calculée lors de la deuxième zone de fonctionnement, à partir d'au moins la valeur de ratio maximale constante ;
- et/ou une commande de ratio de boîte de vitesses, constante et égale au ratio de boîte maximal, ou variable, à partir d'au moins la valeur de ratio maximal constant. ;
- et/ou une zone, ou quatrième zone, de fonctionnement, définie pour une cadence roue mesurée supérieure à la valeur cadence roue maximale, les moyens de traitement des données pouvant être programmés pour calculer :
   - une commande de la cadence pédale constante, supérieure à la cadence pédale variable calculée lors de la troisième zone de fonctionnement, et égale à la commande cadence pédale maximale ;
- et/ou une commande de ratio de boîte, constante et égale au ratio de boîte maximal, ou variable, à partir d'au moins la valeur de ratio maximale constante.

Dans un dispositif selon l'invention, les moyens de traitement de données peuvent être programmés pour varier ou pour faire varier la valeur de ratio minimale de la boîte de vitesse, par exemple pour faire varier la valeur du premier point de fonctionnement.

Dans un dispositif selon l'invention, les moyens de traitements de données peuvent être programmés pour calculer le deuxième point de fonctionnement en fonction, en outre, d'une pente, dite la pente de la cadence pédale.

Un dispositif d'assistance électrique selon l'invention peut comporter en outre:
- Au moins un système ou des moyens de collecte de données pour déterminer au moins une vitesse de rotation du pédalier, dite consigne de cadence pédale ;
- des moyens, par exemple au moins un capteur, pour mesurer la vitesse de rotation d'une roue du vélo, dite cadence roue mesurée.

L'invention concerne également une bicyclette à assistance électrique comportant un dispositif selon l'invention, telle que définie ci-dessus ou dans la présente demande.

L'invention concerne également un procédé de commande de la cadence de pédalage d'un vélo ou d'une bicyclette à assistance électrique, mettant en oeuvre un dispositif selon l'invention. L'invention concerne également un procédé de commande de la cadence de pédalage d'un vélo à assistance électrique, par exemple à l'aide d'un dispositif selon l'invention, comportant au moins les étapes suivantes:
- de collecte de données pour recevoir dans une boite de vitesse une information de vitesse de rotation du pédalier, dite consigne de cadence pédale, et de vitesse de rotation de la roue du vélo, dite cadence roue mesurée, la boite de vitesse, comprenant un ratio de boîte de vitesse maximal et un ratio de boîte de vitesse minimal ;
- de traitement de données à l'aide de moyens de traitement de données, intégrés à la boite de vitesse, permettant de calculer au moins :
   o Deux valeurs de cadence de roue, dont :
      ▪ une plus petite valeur de cadence de roue, nommée premier point de fonctionnement et déterminée à partir d'au moins la valeur du ratio de boîte minimale et de la consigne de cadence pédale,
      ▪ une plus grande valeur de cadence de roue, nommée deuxième point de fonctionnement et déterminée à partir d'au moins le ratio de boîte de vitesses maximale et la consigne de cadence pédale.

Dans un procédé selon l'invention, les moyens de traitement de données peuvent en outre être programmés pour calculer ou déterminer :
- au moins une commande de vitesse de rotation du pédalier, dite commande de la cadence pédale ;
- et/ou au moins une commande de ratio de boîte de vitesses, dite commande de boîte de vitesses ;
- et/ou au moins une valeur de cadence roue maximale au-delà de laquelle la commande de la cadence pédale est limitée à une valeur maximale prédéterminée, dite commande cadence pédale maximale, ladite valeur de cadence roue maximale étant déterminée à partir de la valeur de ratio de boîte de vitesses maximale et de la commande cadence pédale maximale.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, données à titre d'exemple non limitatif, et faite en référence aux dessins annexés sur lesquels :
- la figure 1 est une vue schématique de dispositif d'assistance électrique pour vélo
- la figure 2 est un exemple de vélo à assistance électrique ;
- les figures 3A et 3B sont des courbes illustrant la variation de la cadence pédale par rapport à la cadence roue selon un premier mode de réalisation ;
- les figures 4A et 4B sont des courbes illustrant la variation de la cadence pédale par rapport à la cadence roue selon un deuxième mode de réalisation ;
- la figure 5 est un exemple de schéma fonctionnel d'une réalisation de l'invention.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près. Par ailleurs, les termes « compris entre ... et ... » et équivalents signifient que les bornes sont incluses, sauf mention contraire.

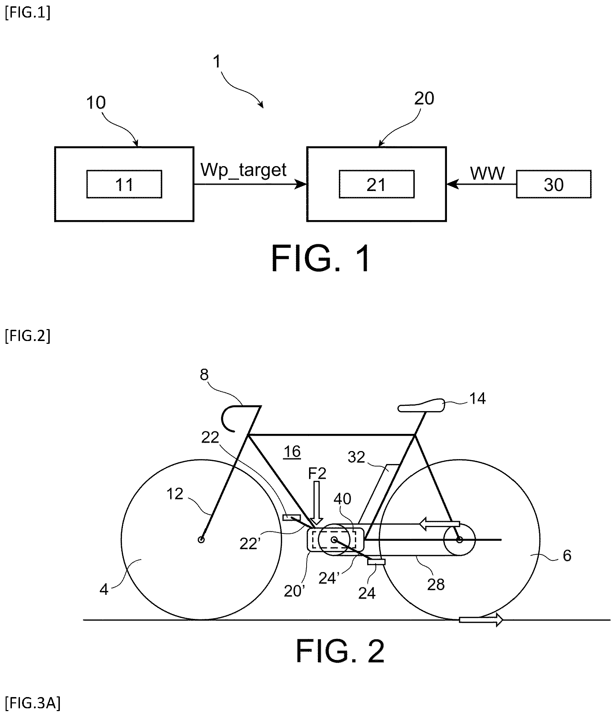

L'invention porte notamment sur un dispositif 1 et un procédé de commande de la cadence de pédalage d'un vélo à assistance électrique. L'invention permet d'adapter la cadence de pédalage à partir de différentes consignes provenant de l'utilisateur d'un tel vélo lors d'un usage urbain ou d'un usage sport. Ce dispositif 1 peut être intégré au vélo. Comme illustré en figure 1, selon un exemple de réalisation, il comporte un système d'interface homme-machine 10, un système de boîte de vitesses 20 et un système de mesure de la vitesse vélo 30. Des moyens numériques 21 sont également prévus (par exemple un processeur ou un microprocesseur ou un ASIC programmé(s) selon un code de logiciel embarqué). Dans l'exemple représenté en figure 1, les moyens numériques 21 font partie du système 20. En variante, ils sont extérieurs à ce système 20, tout en assurant les mêmes fonctions. Par exemple, ils peuvent être intégrés dans les moyens 10.

Le rapport entre la cadence de la roue et la cadence de la pédale est appelé valeur de ratio de boîte de vitesse. Ce ratio détermine combien de rotations de pédales permettent de produire une rotation de roue. Un ratio de boîte égal à 1 permet de réaliser un tour de roue pour un tour de pédale effectué. La boîte de vitesse 20 comporte une valeur minimale de ce ratio (ou valeur de ratio minimale (rgb_min)) et une valeur maximale de ce ratio (ou valeur de ratio maximale (rgb_max)). La zone d'utilisation se situe entre une configuration du système à la valeur de ratio minimale et une configuration à la valeur de ratio de boite maximale.

Le système d'interface homme-machine 10 communique avec les moyens 21 par exemple via un convertisseur analogique numérique (CAN). En outre, les moyens 21 sont connectés au système analogique de mesure de la vitesse vélo 30.

Des modes de réalisation particuliers vont être décrits se rapportant à différents comportements d'un dispositif ou d'un procédé selon l'invention. Ces modes de réalisation peuvent être adaptés à tous les vélos à assistance électrique comprenant un système de boîte de vitesses et aux systèmes à transmission de vitesse continue (Continuously Variable Transmission ou CVT).

Le système d'interface homme-machine 10 comprend des moyens 11, par exemple un sélecteur, par exemple encore un bouton, de sélection de consigne de cadence pédale et des moyens numériques permettant de convertir la sélection effectuée par ce sélecteur en signal. Ces moyens 11 permettent d'enregistrer le niveau de cadence pédale désiré par l'utilisateur. Par exemple, l'utilisateur peut sélectionner un niveau de cadence pédale désiré sur une échelle, qui peut être discrétisée, entre une valeur minimum et une valeur maximum, par exemple encore sur une échelle de 1 à 10. Le système d'interface machine 10 envoie aux moyens 21 un signal numérique wp_target, image de la consigne sélectionnée par l'utilisateur à l'aide des moyens 11. Ce signal numérique wp_target permet de fixer, entre autres, une consigne de vitesse de rotation des pédales, dite commande de cadence pédale wp_command. Autrement dit, à partir de la consigne de cadence pédale wp_target, le système détermine une commande de cadence pédale wp_command.

En variante, le système peut déterminer automatiquement ce signal sans l'aide de l'utilisateur ; (dans ce cas, l'interface 10 peut être dotée de moyens, par exemple une puce bluetooth ou LTE, pour recevoir wp_target en provenance d'un centre de données (« data center ») ou d'un téléphone portable de l'utilisateur):
- par exemple, sur un serveur cloud, avec un logiciel embarqué permettant de calculer une ou des cadences de pédalage optimales pour l'utilisateur, à partir de données de l'utilisateur préalablement collectées ;
- ou, manuellement par l'utilisateur, par exemple par sélection directe d'une consigne de cadence pédale via une application de téléphone portable ou un portail web.

En outre, ce signal wp_target peut être déterminé à divers moments :
- au démarrage, ou à un autre moment pour définir une nouvelle valeur de variable de consigne de cadence pédale ;
- ou à l'arrêt du vélo, par exemple pour enregistrer la dernière valeur utilisée ;
- ou en continu, ou à intervalles plus ou moins réguliers, par exemple par transmission sans fil entre le téléphone et le vélo (via l'interface 10), ou entre un serveur web et le vélo, ou via une unité IOT ; dans ce dernier cas (unité IOT), l'interface 10 peut comporter des moyens (par exemple des puces différentes) permettant d'utiliser des protocoles de communication différents.

Le système 30 de mesure de vitesse de la bicyclette comporte un ou des capteurs permettant par exemple de mesurer la vitesse de vélo ou une cadence de roue de vélo mesurée (ww). Par exemple, le capteur peut être du type comportant un aimant ou un accéléromètre qui peut être situé dans une roue, par exemple la roue arrière (sur ou dans le moyeu, ou dans un rayon, ou dans un disque de frein). D'autres capteurs peuvent être utilisés, permettant une mesure indirecte, par exemple :
- par une centrale inertielle sur une carte électronique à partir de la vitesse du vélo ;
- ou, lorsque le pédalier entraîne la boîte de vitesses, par la mesure de la vitesse du moteur d'assistance ou par la mesure de la cadence pédale (ratio de boîte connu) ;
- ou par capteur(s) GPS permettant de calculer la vitesse du vélo.

Les moyens 21 ont donc des moyens, par exemple une ou plusieurs entrée(s), pour recevoir :
- une information de vitesse de rotation du pédalier, dite de cadence pédale mesurée wp_measure,
- et une information de vitesse de rotation de la roue du vélo, dite cadence de roue mesurée (ww).

Les moyens numériques 21 reçoivent la consigne de vitesse de rotation des pédales et la transforment en une commande de la cadence pédale (wp_command) et en une commande de ratio de boîte de vitesses rgb_command. Le ou les moteur(s) d'assistance électrique, par exemple deux moteurs appartenant à deux motoréducteurs, est/sont commandés en vitesse et en couple. Ils utilisent les commandes wp_command et rgb_command en tant que données d'entrées afin de déterminer le fonctionnement souhaité pour une vitesse donnée du vélo ou une cadence de roue mesurée. Les commandes en couple et vitesse de ce(s) moteur(s) sont fonction des commandes de cadence pédale et de ratio de boîte de vitesse.

Les moyens 21 définissent la cadence pédale (wp_command) ainsi que la commande (rgb_command) de ratio de boîte de vitesse entre la valeur de ratio minimale (rgb_min) et la valeur de ratio maximale (rgb_max).

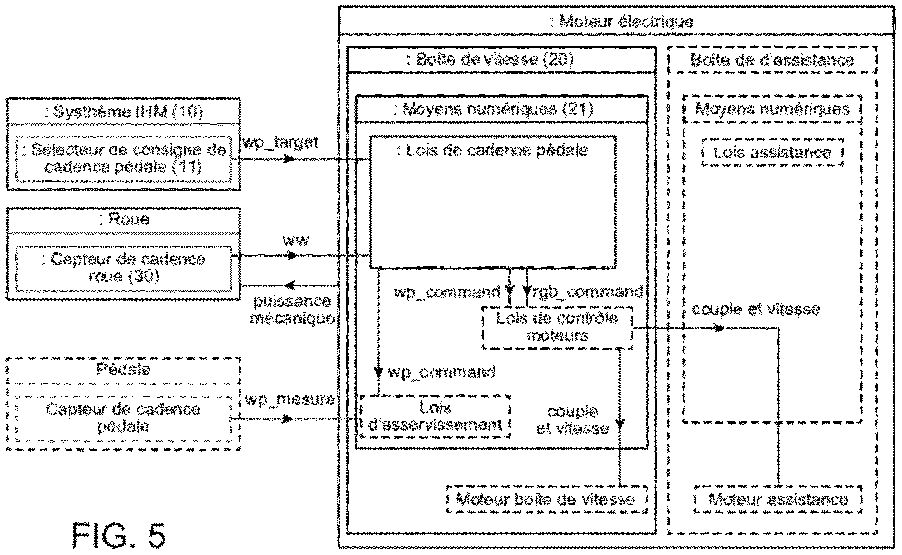

La commande rgb_command, permet d'ajuster les variations de la commande de la cadence pédale par rapport à la cadence de la roue. Comme on le comprend de la figure 5, les données wp_target et de cadence de roue (ww) sont fournies aux moyens 21, lesquels calculent les données wp-command et rgb_command qui règlent la cadence de pédalage (pour générer la loi de contrôle des moteurs). Il s'agit là d'une fonctionnalité différente de celle dédiée au réglage du comportement et du niveau d'assistance électrique, même si des données telles que les lois de contrôle du/des moteur(s) peuvent être utilisées pour l'assistance électrique, comme cela est indiqué en figure 5 (sur cette figure, des traits interrompus correspondent à des fonctionnalités périphériques à l'invention et/ou qui mettent en œuvre tout ou partie des données obtenues selon l'invention).

Le document WO2023180643 décrit des aspects d'un groupe motopropulseur à transmission pilotée pour vélo à assistance électrique, qui peuvent être utilisés dans le cadre de la présente invention.

Les ratios de boite de vitesse sont réglables automatiquement et/ou mécaniquement à l'aide d'un jeu de poulies ou grâce à un moteur entrainant un réducteur épicycloïdal de sorte à modifier son rapport de transmission (à ce sujet on peut se reporter au document WO2023180643). La valeur de ratio de boite minimale peut être modifiée numériquement ou mécaniquement en variant le rapport de transmission entre le système de boîte de vitesses et la roue.

Les commandes en couple et vitesse du ou des moteurs d'assistance électrique sont fonction des commandes de cadence pédale et de ratio de boîte de vitesse.

Les moyens 21 sont configurés ou programmés selon un code de logiciel embarqué permettant de mettre en œuvre un procédé selon l'invention.

Par exemple, pour une consigne cadence pédale donnée, il est possible de déterminer deux valeurs de cadence de roue (WC1 et WC2) correspondantes (à partir du moment où rgb_min et rgb_max sont fixés, WC1 et WC2 découlent de la consigne cadence pédale) qui sont fixes et entre lesquelles le code des moyens 21 assurera les commandes de la cadence pédale (wp_command) et de ratio de boîte de vitesses (rgb_command). Par exemple :
- dans un premier mode de réalisation : la commande de la cadence pédale est constante et égale à la consigne de cadence pédale (wp_target), et la commande de ratio de ratio de boite de vitesses varie entre rgb_min et rgb_max ;
- dans un deuxième mode de réalisation : la commande de la cadence pédale est variable suivant une pente donnée, et supérieure ou égale à la consigne de cadence pédale (wp_target) ou inférieure ou égale à la consigne de cadence pédale (wp_target). On nommera cette pente la pente de la cadence pédale. La commande de ratio de ratio de boite de vitesses varie entre rgb_min et rgb_max.

Les deux valeurs WC1 et WC2 de cadence de roue définissent un premier et second point de fonctionnement, le premier (WC1) étant inférieur au deuxième (WC2).

Ces points de fonctionnement peuvent délimiter au moins deux zones de fonctionnement. Comme illustré en figure 3A, représentant un premier mode de réalisation, quand la cadence roue mesurée est inférieure à la valeur prédéterminée du premier point de fonctionnement (WC1), alors la commande de cadence pédale wp_command, envoyée par les moyens 21, est variable et inférieure à la consigne de cadence pédale wp_target. Dans cette première zone, la commande de cadence pédale est déterminée à partir de la valeur de ratio minimale de la boîte et de la cadence de rotation de la roue mesurée. En effet, la pente de wp_command est égale à l'inverse de rgb_min.

Dans la deuxième zone de fonctionnement, la cadence mesurée de la roue est comprise entre les deux points de fonctionnement WC1 et WC2. La commande de cadence pédale wp_command est constante (ici, la pente de cadence pédale est donc nulle) et égale à la consigne de cadence pédale. La commande de ratio de boîte de vitesses rgb_command varie entre la valeur de ratio minimale rgb_min et celle du ratio maximale rgb_max. Cette valeur de ratio de boîte de vitesse rgb est alors déterminée par la vitesse du vélo ou par la cadence de roue mesurée (c'est l'inverse de la pente de la droite D représentée en figure 3A, cette droite passant par l'origine et par le point de coordonnées ww et wp_target).

Selon une réalisation plus particulière, il est également possible, pour une consigne cadence pédale donnée, de déterminer une valeur de cadence roue WCmax (voir figure 3A), supérieure à WC2, au-delà de laquelle la commande cadence pédale est limitée à une valeur maximale Cmax définie par le programme ou calculée à partir des données utilisateur ou sélectionnée par l'utilisateur. Cette valeur WCmax de cadence de la roue constitue un troisième point de fonctionnement.

On peut alors définir une troisième zone de fonctionnement, la cadence roue mesurée étant comprise entre le deuxième point de fonctionnement WC2 et le troisième point de fonctionnement WCmax, la commande de cadence pédale étant alors variable, supérieure à la cadence pédale calculée lors de la deuxième zone de fonctionnement. Dans la troisième zone de fonctionnement, la commande de cadence pédale est déterminée à partir de la cadence de roue mesurée et de la valeur de ratio de boîte de vitesse maximale constante. En effet, la pente de la commande de la cadence pédale est égale à l'inverse de rgb_max.

Enfin, quand la cadence roue mesurée est supérieure au troisième point de fonctionnement WCmax, la commande de cadence pédale pourra être constante et supérieure à celle calculée lors de la troisième zone de fonctionnement. La commande pourra alors avoir une valeur égale à la cadence pédale maximale prédéterminée Cmax. Le ratio de boîte sera alors égal à une constante de ratio maximale.

Les moyens 21 peuvent être programmés pour mettre en application des étapes de calcul correspondant aux étapes décrites ci-dessus. Un exemple d'algorithme permettant de mettre en œuvre ces étapes est le suivant :

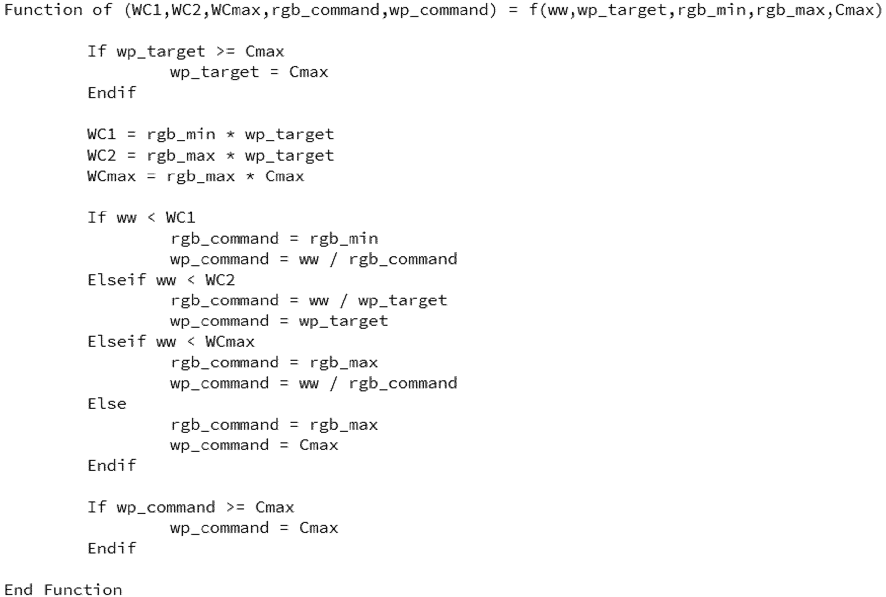

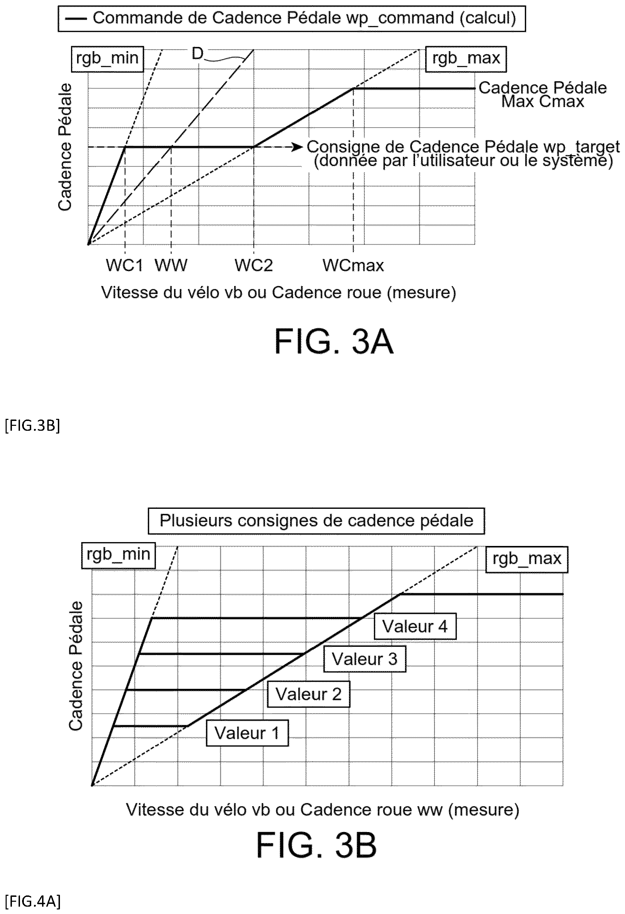

Le premier mode de réalisation décrit ci-dessus en lien avec la figure 3A permet de fonctionner en cadence pédale constante dans une ou plusieurs, par exemple quatre, zone(s) de fonctionnement. Comme il a été décrit précédemment, pour une consigne cadence pédale donnée les points de fonctionnement correspondants WC1 et WC2 peuvent être identifiés (ils sont l'intersection de la droite qui est à ce niveau de consigne de cadence de pédale et des 2 droites de pentes données respectivement par l'inverse de rgb_min et l'inverse de rgb_max). Ainsi à partir de cette loi de cadence pédale constante, il est possible de créer une déclinaison de comportements possibles selon la consigne de cadence pédale wp_target, demandée par l'utilisateur ou repérée ou donnée par le système. La figure 3B représente par exemple quatre comportements possibles du système à partir de quatre valeurs de consignes de cadence pédale (identifiées sur la figure respectivement par Valeur 1, Valeur 2, Valeur 3, Valeur 4). En fonction de la consigne de la cadence de pédale déterminée ou sélectionnée, l'un de ces comportements sera mis en œuvre.

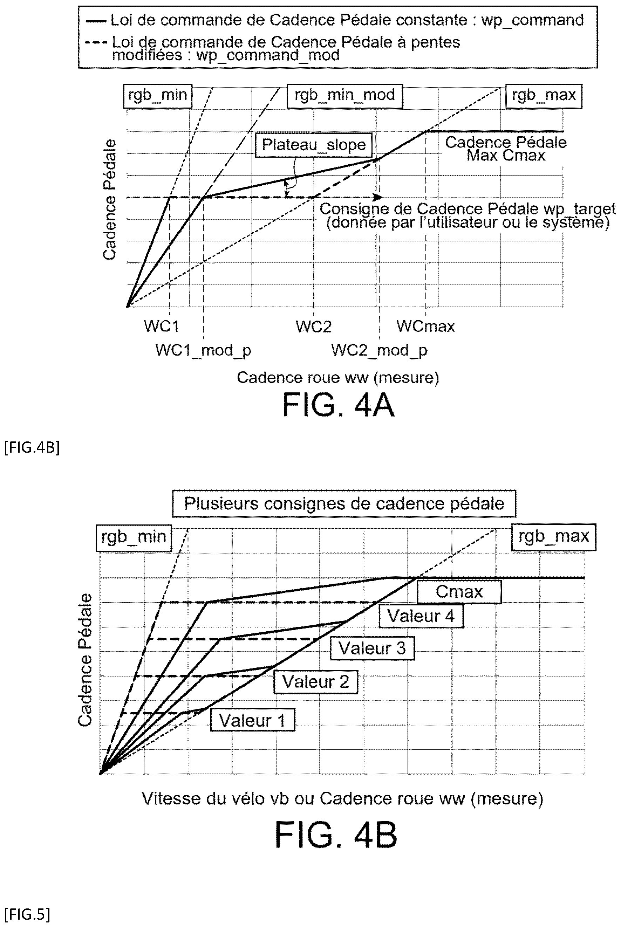

Un deuxième mode de réalisation, dit loi de cadence pédale à pentes modifiées, est représenté en figures 4A et 4B. Ce mode de réalisation apporte de nombreux avantages par rapport au premier. Par exemple, il permet, dans la première zone de fonctionnement, d'éviter à l'utilisateur de ressentir une sensation de pédalage trop rapide au démarrage dans le cas où la valeur de ratio minimale est trop faible. De même, il permet, durant la seconde zone de fonctionnement, d'éviter à l'utilisateur de ressentir une limitation dans sa cadence de pédalage quand la consigne de cadence pédale est atteinte et qu'il souhaite augmenter la vitesse du vélo. En effet, afin de réduire ces perceptions, ce second mode de réalisation permet de modifier, ici diminuer, la pente de la première zone de fonctionnement, et/ou de modifier, ici augmenter, la pente de la commande de la cadence de pédalage de la seconde zone de fonctionnement, dite la pente de la cadence pédale (figure 4A).

Pour ce faire, on attribue à chaque valeur de consigne de cadence pédale wp_target, une nouvelle valeur de ratio minimale rgb_min_mod, ainsi qu'une valeur de pente de la cadence pédale plateau_slope. Cette valeur de pente de la cadence pédale était nulle lors du premier mode de réalisation, elle sera strictement positive dans ce deuxième mode de réalisation. D'autres modes de réalisation peuvent être envisagés sans modification de la pente ou, par exemple :
- en modifiant la position du palier;
- en appliquant une loi non linéaire à la place d'une pente ;

On peut ainsi générer de nouvelles valeurs des points de fonctionnements (WC1_mod_p, WC2_mod_p) et du couple de commande (rgb_command,wp_command).

Ces modifications réinitialisent les valeurs de points de fonctionnement (WC1_mod_p, WC2_mod_p) pour chaque valeur de consigne de cadence pédale. Les points de fonctionnement sont calculés en fonction de la valeur du ratio de boîte de vitesses minimale modifiée, ainsi que la valeur de pente de la cadence pédale. Les moyens 21 peuvent être programmés pour mettre en application cet aspect, par exemple selon l'algorithme suivant :

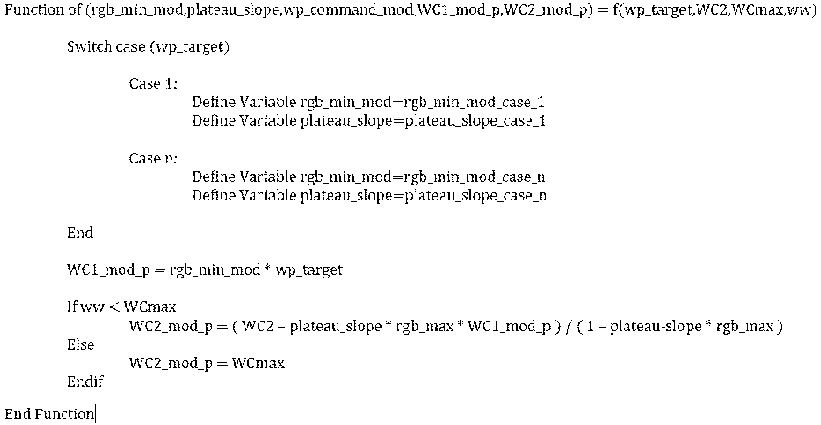

Il en résulte que les paramètres de commande de cadence pédale wp_command et de ratio de boîte rgb_command sont recalculés dans les deux premières zones de fonctionnement (voir les lignes « If ww < WC1_mod_p » et « Else if ww < WC2_mod_p ») comme illustré dans l'algorithme ou le procédé suivant :

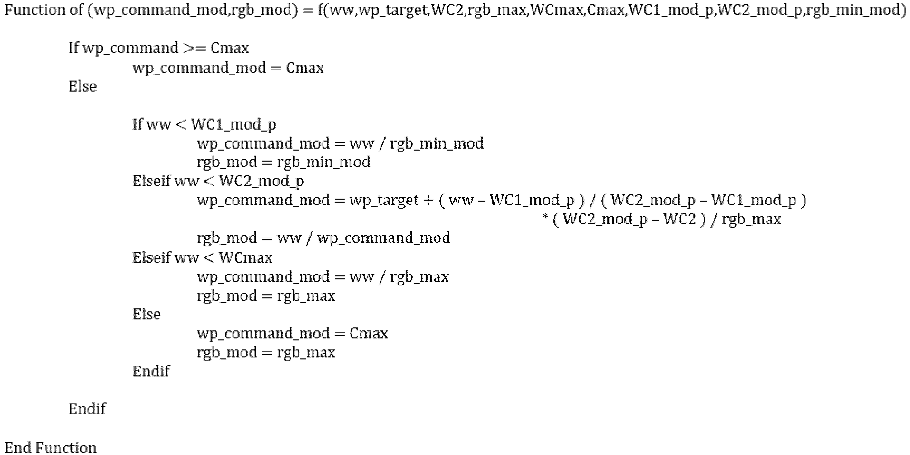

Dans la première zone de fonctionnement, on a une augmentation du ratio de boite minimum rgb_min. On définit des valeurs de rgb_min_mod d'autant plus grandes que la consigne de cadence pédale wp_target est faible, en faisant tendre rgb_min vers rgb_max. On peut ainsi proposer à l'utilisateur, à faible vitesse vélo, de pédaler moins vite en usage urbain (ratio de boîte plus proche de rgb_max) pour obtenir de l'assistance ; et plus vite en usage sport (ratio de boîte plus proche de rgb_min) selon la valeur de la consigne de cadence pédale wp_target. En d'autres termes,
- pour une vitesse de vélo ww faible et des valeurs de wp_target faibles, l'utilisateur a besoin de pédaler moins vite pour obtenir de l'assistance : c'est l'usage urbain.
- pour une vitesse de vélo ww faible mais pour des valeurs de wp_target élevées, l'utilisateur a besoin de pédaler plus vite pour obtenir de l'assistance : c'est l'usage sportif.

Une variation de rgb_min peut être obtenue :
- par logiciel : en variant la vitesse d'un moteur d'un motoréducteur comprenant par exemple un train épicycloïdal ;
- ou par moyen mécanique : en variant le rapport de transmission entre le système de boîte de vitesses et la roue (modification plateau/pignon avec chaîne ou diamètres avec courroie).

Dans la seconde zone de fonctionnement, l'introduction de la pente plateau_slope sur la commande de cadence pédale wp_command permet d'obtenir certaines caractéristiques. L'objectif est de demander à l'utilisateur, à vitesse vélo plus élevé, de pédaler plus vite que la consigne de cadence pédale constante, que ce soit en usage urbain ou en usage sport. En usage urbain, la consigne wp_target étant faible et rgb_min_mod se rapprochant de rgb_max, l'augmentation de la commande de cadence pédale (wp_command) sur le plateau de cadence pédale constante est plus faible qu'en usage sport. En d'autres termes, pour une vitesse vélo ww plus élevée, avec des valeurs de wp_target faibles, l'utilisateur a besoin de pédaler plus vite pour augmenter la vitesse du vélo : usage urbain. De même pour une vitesse de vélo élevée mais pour des valeurs de wp_target élevées, l'utilisateur a besoin de pédaler encore plus vite pour augmenter la vitesse du vélo : usage sport.

La figure 4B représente, par exemple, 4 comportements possibles du système à partir de quatre valeurs de consignes de cadence pédale.

Un fonctionnement à quatre zones a été décrit précédemment. Des zones de fonctionnement additionnels peuvent être rajoutées et incorporées dans l'invention. Par ailleurs, un fonctionnement à une seule zone, deux zones ou trois zones est aussi possible. Il suffit d'omettre certains points de fonctionnement.

Par exemple, on peut considérer un fonctionnement avec trois zones délimitées par WC1 et WC2 (en dessous de WC1, entre WC1 et WC2 et au-delà de WC2). Une quatrième zone est définie par WCmax pour faire fonctionner le système dans toute la plage de vitesse possible, mais pourrait être gérée par un autre bloc logiciel.

Par ailleurs, une loi de commande à ratio de boîte constant peut avoir une seule zone si Cmax n'est pas considéré ou deux zones si Cmax est considéré.

Un fonctionnement en trois zones est aussi possible, avec le même exemple de ratio de boîte constant en première zone, une seconde zone qui relierait WC1 à WCmax, puis une troisième zone à cadence constante égale à Cmax.

D'autres types de lois de commande sont possibles et peuvent être mises en œuvre dans le cadre de la présente invention.

Comme représenté en figure 2, une bicyclette à laquelle l'invention peut être appliquée comporte un cadre 16 (composé de plusieurs tubes assemblés), une roue avant 4, une roue arrière 6, un guidon 8 relié à la roue avant par une fourche 12, une selle 14.

Le système 1 de commande peut être distribué entre le système d'interface homme-machine sur le guidon 8 et le système de boîte de vitesse intégré au système de motorisation ; le système 30 de mesure de la vitesse vélo pouvant être positionné en différents endroits de la bicyclette.

Par exemple le système d'interface homme-machine 10 peut être fixé sur le guidon 8, mais d'autres positions sont possibles, par exemple sur un tube du cadre ou à l'intérieur du moteur ou de la boîte de vitesse (20).

La bicyclette comporte également un pédalier, lequel comporte deux pédales 22, 24, reliées par des manivelles 22', 24' à un axe qui pénètre dans un boîtier. L'action du cycliste sur le pédalier entraîne une chaîne 28. S'agissant d'une bicyclette à assistance électrique, un système de motorisation, comprenant deux motoréducteurs et la boite de vitesse (20) sont hébergés dans un carter 20' laquelle est traversée par l'axe du pédalier. Le carter 20' peut contenir également les moyens 21 de commande (en traits interrompus sur la figure 2), qui permettent de commander l'assistance fournie au cycliste par le moteur électrique. D'autres solutions ont été mentionnées ci-dessus pour ces moyens 21. La référence 32 désigne une batterie électrique. De plus, le système 30 de mesure de la vitesse vélo peut être positionné en différents endroits, par exemple sur, ou en lien ou en interaction avec, une roue ou à l'intérieur du moteur ou de la boîte de vitesse (20).

Selon un exemple de réalisation, la boîte de vitesse peut être intégrée dans le système de motorisation, comprenant 2 motoréducteurs, l'un de ces motoréducteurs pouvant assurer la fonction de boîte de vitesse.

## Revendications

1. Dispositif (1) de commande de la cadence de pédalage d'un vélo à assistance électrique (1), le dispositif comprenant :
• au moins un système de boite de vitesse (20), comprenant un ratio de boîte de vitesse maximale (rgb_max) et un ratio de boîte de vitesse minimale (rgb_min);
• des moyens de traitement de données (21) spécialement programmés pour :
o recevoir une information de vitesse de rotation du pédalier, dite consigne de cadence pédale, et une information de vitesse de rotation de la roue du vélo, dite cadence de roue mesurée;
o calculer deux valeurs de cadence de roue, dont :
▪ une plus petite valeur de cadence de roue (WC1), nommée premier point de fonctionnement, calculée à partir d'au moins la valeur du ratio de boîte minimale et de la consigne de cadence pédale,
▪ une plus grande valeur de cadence de roue (WC2), nommée deuxième point de fonctionnement, calculée à partir d'au moins la valeur du ratio de boîte de vitesse maximale et de la consigne de cadence pédale ;
o calculer, pour au moins une cadence de roue mesurée inférieure à WC1, et pour au moins une cadence de roue mesurée comprise entre WC1 et WC2, à partir d'au moins ladite information de cadence de roue mesurée :
*une commande de vitesse de rotation du pédalier, dite commande de la cadence pédale;
* une commande de ratio de boîte de vitesses, dite commande de ratio de boîte.

2. Dispositif selon la revendication 1, la commande de la cadence pédale comportant une première zone de fonctionnement, définie pour une cadence roue mesurée non nulle et inférieure au premier point de fonctionnement, les moyens (21) étant programmés pour calculer une commande de la cadence pédale, variable et inférieure à la consigne de cadence pédale à partir d'au moins la valeur de ratio minimale constante.

3. Dispositif selon la revendication 1 ou 2, la commande du ratio de boîte comportant une première zone de fonctionnement, définie pour une cadence roue mesurée non nulle et inférieure au premier point de fonctionnement, les moyens (21) étant programmés pour calculer une commande de ratio de boîte constante et égale au ratio de boîte minimal, ou variable, à partir d'au moins la valeur de ratio minimale constante.

4. Dispositif selon l'une des revendications 1 à 3, la commande de la cadence pédale comportant une deuxième zone de fonctionnement, définie pour une cadence roue mesurée comprise entre le premier et le deuxième point de fonctionnement, les moyens (21) étant programmés pour calculer une commande de la cadence pédale :
- constante et égale à la consigne de cadence pédale ;
- ou variable, à partir d'au moins la valeur de la consigne de cadence pédale, cette commande de la cadence pédale pouvant être par exemple :
* variable suivant une pente, dite la pente de la cadence pédale, en étant supérieure ou inférieure ou égale à la consigne de cadence pédale ;
* ou non linéaire.

5. Dispositif selon l'une des revendications 1 à 4, la commande du ratio de boîte comportant une deuxième zone de fonctionnement, définie pour une cadence roue mesurée comprise entre le premier et le deuxième point de fonctionnement, les moyens (21) étant programmés pour calculer une commande de ratio de boîte, variable entre le ratio de boîte minimal et le ratio de boîte maximal.

6. Dispositif selon l'une des revendications 1 à 5, les moyens de traitements de données (21), étant programmés pour déterminer au moins une valeur de cadence roue maximale (WCmax) au-delà de laquelle la commande de la cadence pédale est limitée à une valeur maximale prédéterminée, dite commande cadence pédale maximale, ladite valeur de cadence roue maximale étant déterminée à partir de la valeur de commande de ratio maximale et de la commande cadence pédale maximale.

7. Dispositif selon la revendication 6, la commande de la cadence pédale comportant une troisième zone de fonctionnement, définie pour une cadence roue mesurée comprise entre le deuxième point de fonctionnement et la valeur cadence roue maximale, les moyens (21) étant programmés pour calculer une commande de la cadence pédale variable, supérieure à la cadence pédale calculée lors de la deuxième zone de fonctionnement, à partir d'au moins la valeur de ratio maximale constante.

8. Dispositif selon l'une des revendication 6 ou 7, la commande du ratio de boîte comportant une troisième zone de fonctionnement, définie pour une cadence roue mesurée comprise entre le deuxième point de fonctionnement et la valeur de cadence roue maximale (WCmax), les moyens (21) étant programmés pour calculer une commande de ratio de boîte constante et égale au ratio de boîte maximal, ou variable, à partir d'au moins la valeur de ratio maximale constante.

9. Dispositif selon la revendication 7, la commande de la cadence pédale comportant une quatrième zone de fonctionnement, définie pour une cadence roue mesurée supérieure à la valeur cadence roue maximale, les moyens (21) étant programmés pour calculer une commande de la cadence pédale constante, supérieure à la cadence pédale variable calculée lors de la troisième zone de fonctionnement, et égale à la commande cadence pédale maximale.

10. Dispositif selon l'une des revendication 7 à 9, la commande du ratio de boîte comportant une quatrième zone de fonctionnement, définie pour une cadence roue mesurée supérieure à la valeur de cadence roue maximale (WCmax), les moyens (21) étant programmés pour calculer une commande de ratio de boîte constante et égale au ratio de boîte maximal, ou variable, à partir d'au moins la valeur de ratio maximale constante.

11. Dispositif selon l'une des revendications 1 à 10, les moyens de traitements de données (21) étant programmés :
- pour varier la valeur de ratio minimale de la boîte de vitesse (20) ;
- et/ou pour calculer le deuxième point de fonctionnement en fonction, en outre, d'une pente, dite la pente de la cadence pédale ;
- et/ou étant intégrés à la boite de vitesse (20).

12. Dispositif selon l'une des revendications 1 à 11, comprenant en outre:
• Au moins un système de collecte de données (10) pour déterminer au moins une vitesse de rotation du pédalier, dite consigne de cadence pédale ;
• Au moins un capteur (30) pour mesurer la vitesse de rotation d'une roue du vélo, dite cadence roue mesurée.

13. Bicyclette à assistance électrique comportant un dispositif d'assistance électrique selon la revendication 12.

14. Procédé de commande de la cadence de pédalage d'un vélo à assistance électrique, le procédé comportant les étapes de :
• de collecte de données pour recevoir dans une boite de vitesse (20) une information de vitesse de rotation du pédalier, dite consigne de cadence pédale, et de vitesse de rotation de la roue du vélo, dite cadence roue mesurée, la boite de vitesse (20), comprenant un ratio de boîte de vitesse maximale et un ratio de boîte de vitesse minimale ;
• de traitement de données à l'aide de moyens de traitement de données (21), intégrés à la boite de vitesse (20), permettant de calculer :
o Deux valeurs de cadence de roue, dont :
▪ une plus petite valeur de cadence de roue (WC1), nommée premier point de fonctionnement et déterminée à partir d'au moins la valeur du ratio de boîte minimale et de la consigne de cadence pédale,
▪ une plus grande valeur de cadence de roue (WC2), nommée deuxième point de fonctionnement et déterminée à partir d'au moins le ratio de boîte de vitesse maximale et la consigne de cadence pédale ;
o et, pour au moins une cadence de roue mesurée inférieure à WC1 et pour au moins une cadence de roue mesurée comprise entre WC1 et WC2,
▪ au moins une commande de vitesse de rotation du pédalier, dite commande de la cadence pédale.
▪ au moins une commande de ratio de boîte de vitesses, dite commande de ratio de boîte.

15. Procédé selon la revendication 14, les moyens de traitement de données (21) étant programmés pour déterminer au moins une valeur de cadence roue maximale au-delà de laquelle la commande de la cadence pédale est limitée à une valeur maximale prédéterminée, dite commande cadence pédale maximale, ladite valeur de cadence roue maximale étant déterminée à partir de la valeur de ratio maximale et de la commande cadence pédale maximale.
